# EUROPÄISCHE PATENTSCHRIFT

(11) **EP 3 525 957 B1**
(45) Veröffentlichungstag und Bekanntmachung des Hinweises auf die Patenterteilung: **09.09.2020**
(21) Anmeldenummer: 17777862.8
(22) Anmeldetag: 26.09.2017
(51) Int. Cl.: B22F 3/105, B29C 64/255, B29C 64/343, B33Y 30/00, B33Y 40/00

(54) **ANLAGE ZUR SCHICHTWEISE OBJEKTHERSTELLUNG AUS WERKSTOFFPULVER MIT BEREITSTELLUNG DES PULVERS IN LINIENFORM**
APPARATUS FOR ADDITIVE MANUFACTURING AN OBJECT FROM A POWDER DISPOSED ALONG A LINE
APPAREIL DE FABRICATION D'UN OBJET PAR MÉTHODE ADDITIVE À BASE DE POUDRE DISPOSÉE SELON UNE LIGNE

(30) Priorität: 12.10.2016 DE 202016006355 U
(43) Veröffentlichungstag der Anmeldung: 21.08.2019
(73) Patentinhaber: Realizer GmbH, 33178 Borchen (DE)
(72) Erfinder: FOCKELE, Matthias, 33178 Borchen (DE); GOLZ, Daniel, 33449 Langenberg (DE)
(74) Vertreter: Weickmann & Weickmann PartmbB
(86) Internationale Anmeldenummer: PCT/EP2017/074345
(87) Internationale Veröffentlichungsnummer: WO 2018/069036

(56) Entgegenhaltungen:
- EP-A1- 2 281 677
- EP-A1- 2 286 982
- DE-A1-102008 022 495
- US-A1- 2008 134 965
- US-A1- 2015 224 712

## Beschreibung

Die Erfindung betrifft eine Anlage zum Herstellen dreidimensionaler Objekte aus Werkstoffpulver, durch schichtweises Verfestigen dieses auf einer Prozessfläche befindlichen Werkstoffpulvers an solchen Stellen der jeweiligen Schicht, welche nach Maßgabe von Geometriedaten dem gerade herzustellenden Objekt entsprechen, wobei die Anlage ein die Prozessfläche umgebenden Prozessboden und eine Pulverzuführvorrichtung zur Zuführung, Bereitstellung und Verteilung des Pulvers auf der Prozessfläche umfasst, wobei die Pulverzuführvorrichtung umfasst:
- ein Transportelement zum Zuführen von Pulver in die Pulverzuführvorrichtung;
   - einen Speicherraum, in den das mindestens eine Transportelement das Pulver zuführt;
   - ein Prozesstransportelement, das auf Pulver im Speicherraum wirken kann, um dieses in dosierter Menge benachbart zu der Prozessfläche auf dem Prozessboden bereitzustellen; und
   - einen Prozessschieber zum Verteilen des benachbart zu der Prozessfläche bereitgestellten Pulvers über die Prozessfläche, wobei das Prozesstransportelement dafür ausgelegt ist, dass das Pulver benachbart zu der Prozessfläche in Form einer Linie bereitstellbar ist.

Bei einer solchen Anlage läuft der Herstellungsprozess üblicherweise durch Wiederholung der folgenden Schritte ab:
- Verfahren der Prozessfläche in eine in Bezug auf den umgebenden Prozessboden hinsichtlich des verwendeten Pulvers passenden Höhe;
- Bereitstellen einer Pulvermenge benachbart zu der Prozessfläche (dies kann auch gleichzeitig oder auch vordem vorher genannten Schritt geschehen);
- gleichmäßiges Verteilen des Pulvers auf bzw. über die Prozessfläche mittels eines Prozessschiebers oder eines anderen entsprechenden Werkzeugs;
- Verfestigen entsprechender Bereiche des auf der Prozessfläche verteilten Pulvers beispielsweise durch Laserschmelzen;
- ggf. Entfernen von überschüssigem und nicht verfestigtem Pulver; und
- erneutes Verfahren der Prozessfläche und Bereitstellen von weiterem Pulver.

Wesentlich für die Qualität des dabei hergestellten Objektes ist es, dass in jeder Schicht möglichst genau die gewünschte Menge Pulver an möglichst genau der gewünschten Stelle verfestigt wird, so dass das Objekt mit der gewünschten Geometrie nach Maßgabe der Geometriedaten und mit einer gewünschten insbesondere möglichst homogenen Festkörper-Mikrostruktur hergestellt werden kann.

Dafür ist jedoch eine möglichst gleichmäßige Verteilung des Pulvers auf der Prozessfläche vorteilhaft. Somit ist die gleichmäßige Verteilung des Pulvers sehr wichtig für die präzise Herstellung eines gewünschten Objektes.

In bisherigen Systemen ist diese gleichmäßige Verteilung des Pulvers jedoch nicht immer gegeben. Beispielsweise wird in einem bekannten Anlagentyp das Pulver in einem Haufen bereitgestellt und anschließend durch einen rotierenden Schieber oder linear verfahrbaren Schieber über die Prozessfläche verteilt. Dies führt jedoch nicht immer zu einer akzeptablen Gleichmäßigkeit der Pulververteilung.

Aus der US 2008/134965 A1, der EP 2 281 677 A1 und der DE 10 2008 022495 A1 sind jeweils Anlagen gemäß dem Oberbegriff des Anspruchs 1 bekannt, wobei jeweils der Mechanismus zur Bereitstellung des Pulvers als Linie unzureichend ist, um eine hinsichtlich einer gleichmäßigen Verteilung eine ausreichend gleichmäßige Pulverlinie bereitzustellen,

Aus der Druckschrift US 2015/224712 A1 ist eine Bereitstellung des Pulvers für die Prozessfläche mittels eines sich drehend durch einen Pulverspeicherraum bewegenden rotierbaren Prozesstransportelement bekannt. Aus der EP 2 286 982 A1 ist die Bereitstellung von Pulver in einer Haufenform und Nutzung eines rotierenden Prozessschiebers.

Es ist daher Aufgabe der vorliegenden Erfindung eine Anlage bereitzustellen, bei der eine gleichmäßigere Pulververteilung als im Stand der Technik erzielt wird.

Diese Aufgabe wird gelöst durch eine Anlage mit den Merkmalen des Anspruchs 1 oder durch eine Anlage mit den Merkmalen des Anspruch 3, wobei bevorzugt die Merkmale beider kennzeichnenden Teile von Anspruch 1 und 3 in einer erfindungsgemäßen Anlage verwirklicht werden. Vorteilhafte Ausgestaltungen sind Gegenstand der abhängigen Ansprüche.

Erfindungsgemäß wird vorgeschlagen, das Pulver an oder neben der Prozessfläche bzw. benachbart zu der Prozessfläche in Form einer Linie bereitzustellen. Dies bietet gegenüber der bisher bekannten Bereitstellung des Pulvers erhebliche Vorteile hinsichtlich einer gleichmäßigen anschließenden Verteilung des Pulvers, da so das Pulver bezogen auf die Erstreckung des Schiebers nicht mehr in einem einzelnen kleinen Bereich konzentriert ist, wodurch einer ungleichmäßigen Dicke der Pulverschicht in dem entsprechenden vom Schieber überstrichenen Bereich vorgebeugt wird.

Erfindungsgemäß ist dafür das Prozesstransportelement, das das Pulver benachbart zu der Prozessfläche bereitstellt, gemäß einem ersten Erfindungsaspekt mit einer länglichen Schiebfläche ausgebildet, die in einer Richtung hin- und herschiebbar ist.

Damit wird bevorzugt direkt Pulver aus dem Speicherraum so weggeschoben, dass das Pulver entsprechend der Form der länglichen Schiebfläche im Wesentlichen oder vollständig linienförmig benachbart zu der Prozessfläche angeordnet ist.

Bevorzugt ist die Linie geradlinig oder z. B. konkav gekrümmt. Dies ist bevorzugt, da die Prozessfläche üblicherweise in Form einer einfachen Geometrie, wie beispielsweise quadratisch, rechteckig oder kreisförmig ausgebildet ist. Durch Anpassung der Linienform an die Form der Prozessfläche kann viel eher für jeden Abschnitt der Prozessfläche die geeignete Pulvermenge, die entlang einer Raumrichtung der Prozessfläche zu verteilen ist, bereitgestellt werden.

Bei entsprechend anderen Formen der Prozessfläche wäre ggf. auch eine entsprechend andere Linienform zu wählen. Gleichzeitig kann es bei bestimmten Formen der Prozessfläche, beispielsweise bereits bei einer kreisförmigen Prozessfläche, vorteilhaft sein, wenn die bereitgestellte Pulverlinie nicht überall gleich dick ist bzw. gleich breit ist bzw. gleich viel Pulver pro Längeneinheit aufweist, da in Projektion der Prozessfläche auf die Pulverlinie in gewissen Bereichen mehr Prozessfläche auf einen bestimmten Linienabschnitt kommt, womit mehr Prozessfläche von diesen Abschnitten her überstrichen werden muss. Dafür kann eine vergrößerte Pulvermenge in den entsprechenden Bereichen der Linie vorteilhaft sein.

Bevorzugt verteilt der Prozessschieber das bereitgestellte Pulver mittels Translationsbewegungen über die Prozessfläche hinweg, insbesondere nur mittels Translationsbewegungen in eine Richtung und Translationsbewegungen in die entgegengesetzte Richtung. Translationsbewegungen bieten gegenüber den Rotationsbewegungen der bisherigen Schieber in Kombination mit der Bereitstellung des Pulvers in Linienform eine besonders gleichmäßige Bewegung und gleichmäßige Pulververteilung, die aufgrund der Linienform auch alle Bereiche der Prozessfläche erreicht.

In anderen Ausführungsbeispielen der Erfindung kann das bereitgestellte Pulver auch mit rotationsbeweglichen bzw. schwenkbeweglichen Schiebern verteilt werden.

Der Prozessschieber ist bevorzugt in Bezug auf den Prozessboden steuerbar höhenverstellbar, so dass einmal ein unteres Ende des Prozessschiebers den Prozessboden berührt oder sehr nahe kommt (z. B. weniger als die Dicke eines Pulverkorns) und so dass einmal das untere Ende beabstandet von dem Prozessboden ist (bevorzugt mehr als die maximale Höhe des linienförmig bereitgestellten Pulvers).

Dies erlaubt es, den Prozessschieber einmal so nahe oder in Kontakt mit dem Prozessboden zu halten, so dass der Prozessschieber bei Verschiebung im Wesentlichen das gesamte Pulver der bereitgestellten Linie mitnimmt. Andererseits kann der Prozessschieber nach einer Bewegung hin zur anderen Seite der Prozessfläche über diese und/oder eine neu bereitgestellte Pulverlinie hinweggehoben werden, um erneut in derselben Bewegung Pulver zu verschieben.

Gemäß einem zweiten Erfindungsaspekt, der mit dem ersten Erfindungsaspekt kombinierbar ist, ist der Speicherraum länglich ausgebildet, insbesondere entsprechend der zuvor genannten länglichen Schiebfläche des ersten Erfindungsaspektes. Darüber hinaus endet das Transportelement erfindungsgemäß im Rahmen des zweiten Erfindungsaspektes an einem Speichertransportelement, das teilweise im oder benachbart zu dem Speicherraum angeordnet ist, um das zugeführte Pulver entlang des Speicherraums zu verteilen, wobei das Speichertransportelement auf zwei Arten betätigbar ist, die einen Transport des Pulvers in entgegengesetzte Transportrichtungen bewirken, und/oder das Speichertransportelement das Pulver gleichzeitig in zwei entgegengesetzte Richtungen transportiert.

Damit ist durch die Verteilung des Pulvers im Speicherraum die linienförmige Bereitstellung bereits teilweise vorbereitet. Insbesondere in der Ausführung mit Prozesstransportelement umfassend einer in einer Richtung hin- und herschiebbaren länglichen Schiebfläche entsprechend dem ersten Erfindungsaspekt ist die linienförmige Bereitstellung des Pulvers bereits durch einfache Hin- und Herbewegung der Schiebfläche aus dem Speicherraum hin zu dem Prozessboden realisiert.

Das Speichertransportelement umfasst dabei bevorzugt einen Schneckenförderer, der entlang des Speicherraums verläuft.

Entweder, insbesondere in der Ausführung als oder mit Schneckenförderer, ist das Speichertransportelement gemäß dem zweiten Erfindungsaspekt auf zwei Arten betätigbar, die einen Transport des Pulvers in entgegengesetzte Transportrichtungen bewirken. Dies ist vorteilhaft, da dann das Transportelement bezogen auf den Speicherraum mittig münden kann, wodurch eine gleichmäßige Verteilung des Pulvers im Speicherraum eher gewährleistet ist, was wiederum eine gleichmäßigere Verteilung des Pulvers entlang der bereitgestellten Pulverlinie begünstigt. Auch eine Mündung des Transportelements weder mittig noch am Rand des Speicherraums ist damit möglich.

Besonders bevorzugt kann dieses in der Ausbildung des Speichertransportelements als Schneckenförderer realisiert werden, der einmal linksdrehend und einmal rechtsdrehend antreibbar ist, wodurch das Pulver jeweils in die eine Richtung entlang des Schneckenförderers und in die entsprechende Gegenrichtung transportiert wird, wobei diesbezüglich vorausgesetzt wird, dass die Schnecke einen gleichförmig durchgehenden Schneckengang aufweist. Dies ist auch technisch einfach mittels eines Elektromotors oder ähnlichem zu realisieren, kann aber auch alternativ durch andere Antriebe erfolgen, die geeignet sind, das Speichertransportelement bzw. den Schneckenförderer in beide Drehrichtungen selektiv anzutreiben.

Alternativ kann das Speichertransportelement gemäß dem zweiten Erfindungsaspekt auch mit unterschiedlich fördernden Bereichen ausgebildet sein, von denen der eine Bereich Pulver in die eine Richtung längs des Speicherraums fördert und der andere Bereich in die entgegengesetzte Richtung. Beide Bereiche sind dann im Bereich des in den Speicherraum mündenden Transportelement benachbart zueinander, so dass das Pulver im gesamten Speicherraum verteilt wird. Dabei ist ebenfalls eine mittige Mündung des Transportelements bezogen auf den Speicherraum möglich. Auch eine Mündung des Transportelements weder mittig noch am Rand des Speicherraums ist damit möglich.

In der Ausbildung mit Schneckenförderer kann dies dadurch realisiert werden, dass die Schnecke keinen gleichförmig durchgehenden Schneckengang aufweist, sondern einen Bereich mit Schneckengang mit Drehsinn in die eine Richtung und einen Bereich mit Drehsinn in die andere Richtung,

Bevorzugt arbeitet das Prozesstransportelement bezogen auf den Prozessboden von unten her, also dass der Speicherraum unterhalb des Prozessbodens liegt und der Prozessboden eine entsprechende längliche schlitzartige Öffnung hin zum Speicherraum aufweist. Durch Bewegung des Prozesstransportelements aus dem Speicherraum in diese Öffnung hinein wird dann unmittelbar das Pulver in Linienform benachbart zu der Prozessfläche bereitgestellt.

Dies gelingt besonders vorteilhaft, wenn das Prozesstransportelement mit der länglichen Schiebfläche, also entweder gemäß dem ersten Erfindungsaspekt oder gemäß der Kombination von erstem und zweitem Erfindungsaspekt, an der Oberseite ausgebildet ist und soweit verfahren wird, dass die Schiebfläche im Wesentlichen bündig und auf gleicher Höhe mit dem Prozessboden ist.

Bevorzugt ist das Prozesstransportelement so abgestimmt auf die Öffnung ausgebildet, dass keine nennenswerten Mengen an Pulver zwischen die Oberseite des Prozesstransportelements und die Innenwände der Öffnungen gelangen kann. Dadurch ist sichergestellt, dass eine definierte Pulvermenge pro Längeneinheit des Prozesstransportelements für die Pulverlinie bereitgestellt wird.

Bevorzugt ist das Prozesstransportelement als eine Art quaderförmiges Hubkolbenelement ausgebildet, welches gesteuert angehoben und abgesenkt werden kann. Dies heißt, dass ein länglicher Kolbenkopf vorgesehen ist, an dessen Oberseite entsprechend die Schiebfläche ausgebildet ist und der von der letzteren Ausdehnung her in etwa der Länge der schlitzartigen Öffnung entspricht und ebenso der Form, so dass er bei seinen Hubbewegungen eine linienförmige Menge Pulver aus dem Speicherraum auf das gewünschte Niveau knapp oberhalb des Prozessbodens fördern kann.

Im Allgemeinen ist der Speicherraum bevorzugt unterhalb des Prozessbodens und in Draufsicht seitlich der Prozessfläche angeordnet.

Da im Allgemeinen Pulvermaterialien verwendet werden, die eine Schutzatmosphäre erfordern, sind Prozessboden und Prozessfläche im Allgemeinen als Unterseite bzw. Boden eines Prozessraumes ausgebildet, der hinsichtlich Erhalt der Schutzatmosphäre entsprechend Wände, Decke und Öffnungen für die Zufuhr oder Abfuhr entsprechender Gase und/oder anderer für den Prozess erforderlichen Elemente und/oder Gegenstände in luftdichter Weise aufweist.

Bevorzugt ist die Prozessfläche durch den Kopf eines entsprechenden Objektkolbens gestützt.

Der Begriff "linienförmig" bzw. "in Form einer Linie" ist hinsichtlich der vorliegenden Erfindung insbesondere so zu verstehen, dass eine Pulverlinie bzw. linienförmig bereitgestelltes Pulver bzw. in Form einer Linie bereitgestelltes Pulver eine Pulveransammlung ist, die kontinuierlich ist und in jedem Abschnitt eine Breite aufweist und sich alle Abschnitte der Pulverlinie kontinuierlich aneinanderreihen und damit eine Länge definieren, wobei die Länge erheblich größer ist als die Breite, insbesondere mindestens zehn Mal so groß. Eine solche Pulverlinie ist auch so zu verstehen, dass in jedem Abschnitt eine gewisse Höhe vorhanden ist, insbesondere bezogen auf den Prozessboden, und diese Höhe im Vergleich zur Länge ebenfalls sehr klein ist, bevorzugt mindestens einem Faktor 10 kleiner.

Bezogen auf die Erfindung ist die Formulierung "im Wesentlichen" bezogen auf Länge, Höhe oder sonstige Raumkoordinaten so zu verstehen, dass im Wesentlichen gleich ausgedehnte Bereiche sich in ihrer Ausdehnung in einem Maß unterscheiden, das von der Größenordnung der durchschnittlichen Korngröße oder weniger entspricht, bevorzugt insbesondere weniger als 100 Korngrößen.

Unter einer benachbarten Anordnung des Pulvers zur Prozessfläche ist hierbei sowohl zu verstehen, dass zwischen dem Pulver und der Prozessfläche ein gewisser Abstand sein kann, als auch, dass kein Abstand zwischen Pulver und Prozessfläche mehr ist und ggf. ein Teil des Pulvers bereits auf der Prozessfläche ist.

Die beiden Erfindungsaspekte der Erfindung werden nachfolgend anhand eines in den Figuren gezeigten und beide Erfindungsaspekte kombinierenden Ausführungsbeispiels erläutert, wobei die Erfindung nicht auf dieses Ausführungsbeispiel beschränkt ist und insbesondere nicht auf eine Kombination der beiden Erfindungsaspekte.
- Figur 1: zeigt einen Vertikalschnitt durch eine erfindungsgemäße Anlage zum Herstellen dreidimensionaler Objekte gemäß einem Ausführungsbeispiel der Erfindung.
- Figur 2: zeigt einen Horizontalschnitt durch die in Figur 1 gezeigte Anlage in Höhe der gestrichelten Linie A-A.

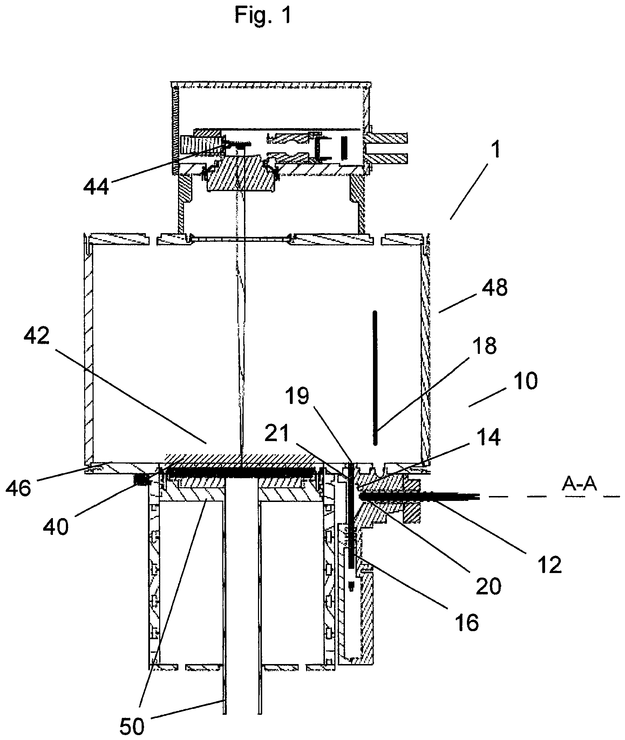

Wie in Figur 1 gezeigt, umfasst eine erfindungsgemäße Anlage 1 zum Herstellen dreidimensionaler Objekte aus Werkstoffpulver eine Prozessfläche 42, auf der eine Pulverschicht 40 angeordnet werden kann, woraufhin beispielsweise mittels Laser 44 einige Bereiche dieser Pulverschicht 40 verfestigt werden können. Die Prozessfläche 42 ist dabei oberhalb und in Flucht mit der Oberseite eines Prozesskolbens 50, der entsprechend nach Bearbeitung einer Pulverschicht 40 herunterfährt, damit die nächste Pulverschicht 40 und die nachfolgende Verfestigung aufgebracht werden bzw. erfolgen können.

Dabei ist benachbart zu der Prozessfläche 42 diese umgebend der Prozessboden 46 angeordnet, der zusammen mit der Prozessfläche 40 den Boden eines Prozessraumes 48 bildet.

Nach jedem Verfestigungsvorgang und Herunterfahren des Prozesskolbens 50 muss eine neue Pulverschicht 40 aufgebracht werden. Dies erfolgt erfindungsgemäß indem ein Prozesstransportelement 16, das an der Oberseite eine längliche Schiebfläche 19 hat, von unten durch einen mit Pulver ganz oder teilweise gefüllten Speicherraum hindurch bewegt wird, bis die Schiebfläche 19 des Prozesstransportelements 16 mehr oder weniger bündig mit dem Prozessboden 46 ist.

Da die Schiebfläche 19 des Prozesstransportelements 16 in Art einer Linie ausgebildet ist, wird nach jedem betreffenden Hubvorgang damit auch das Pulver in Form einer Linie entsprechend der gezeigten Geometrie benachbart zu der Prozessfläche 42 angeordnet bereitgestellt.

Dabei fährt das Prozesstransportelement 16 in eine schlitzartige Öffnung 21, die zwischen dem Speicherraum 14 und dem Prozessboden 46 ausgebildet ist. Nachdem das Pulver benachbart zu der Prozessfläche 42 in Form einer Linie bereitgestellt ist, wird ein Prozessschieber 18 soweit verfahren, dass er den Prozessboden 46 kontaktiert und anschließend translatorisch über die Prozessfläche 42 hinweg bewegt, so dass er die Pulverlinie mitnimmt und über die Prozessfläche 42 verteilt. Der Prozessschieber 18 kann anschließend zur weiteren Verteilung des Pulvers wieder translatorisch in selber Höhe über die Prozessfläche 42 zurückgefahren werden oder er kann entsprechend wieder nach oben verfahren werden, um ohne Kontakt mit der Prozessfläche 42 bzw. dem darauf verteilten Pulver wieder in seine Ausgangsposition zu gelangen.

Gemäß einer alternativen Ausführungsform kann der Prozessschieber 18 auch derart gesteuert höhenbeweglich ausgestaltet sein, dass er bei seiner Vor- und Zurückbewegung kurz vor seinem Umkehrpunkt über einen von ihm vorgeschobenen Pulverrest hinweg gehoben werden kann, um letzteren bei der Rückbewegung wieder mitzunehmen und auf der Prozessfläche 42 zu verteilen.

Um den Speicherraum 14 mit ausreichend Pulver befüllt zu halten, mündet ein Transportelement 12, das als Schneckenförderer ausgebildet ist, in den Speicherraum 14. Immer wenn unzureichend Pulver im Speicherraum 14 ist, wird das Transportelement 12 entsprechend betätigt.

Dabei befinden sich natürlich aufgrund der erwünschten Schutzgasatmosphäre entsprechende Dichtmittel an allen kritischen Stellen, an denen Schutzgas entweichen oder Raumluftatmosphäre eintreten könnte.

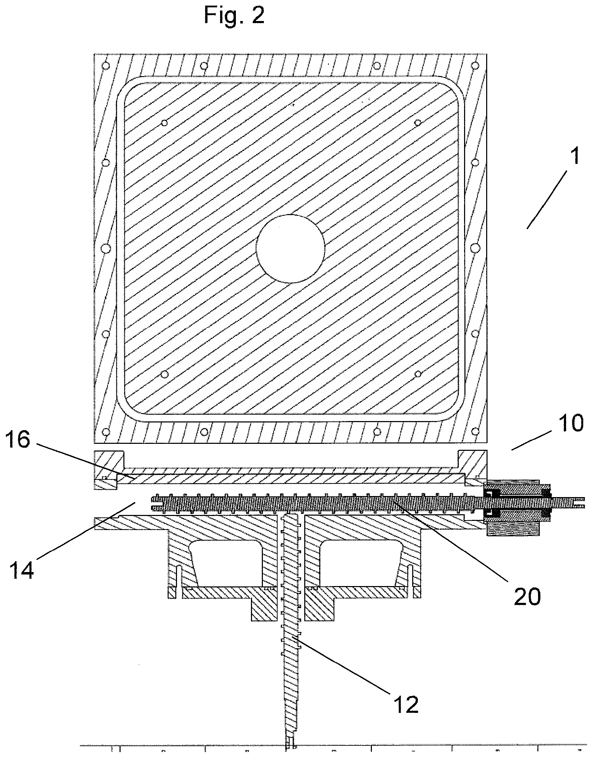

Wie in Figur 2 gezeigt, sind der Speicherraum 14 und das Prozesstransportelement 16 bzw. dessen Oberseite mit der Schiebfläche 19 länglich ausgebildet. Entlang des Speicherraums 14 erstreckt sich ein Speichertransportelement 20, welches ebenfalls als Schneckenförderer ausgebildet ist. Da das Transportelement 12 in den Speicherraum 14 mündet und das Speichertransportelement 20 hin zum restlichen Speicherraum 14 hin keine Wandung aufweist, kann das Speichertransportelement 20 das im Speicherraum befindliche Pulver 14 entlang der Längsrichtung des Speicherraums 14 verschieben bzw. verteilen.

Damit eine gleichmäßige Verteilung des Pulvers im Speicherraum 14 besser erzielt wird, ist das Speichertransportelement 20 bzw. der Schneckenförderer 20 mit einem Motor verbunden (nicht gekennzeichnet), der in beiden Richtungen betreibbar ist. Damit kann bezogen auf Figur 2 das Speichertransportelement 20 sowohl Pulver im Speicherraum 14 von rechts nach links als auch von links nach rechts transportieren.

Alternativ kann auch der Schneckenförderer 20 so ausgebildet werden, dass er nicht einen gleichförmig durchgehenden Schneckengang aufweist, sondern sich der Drehsinn in etwa bei der Mündung des Transportelements 12 in den Speicherraum ändert. Damit wird bei Drehung des Schneckenförderers 20 das Pulver in beide Richtungen entlang des Speicherraums 14 verteilt.

Dadurch ist in beiden Fällen möglich, dass das Transportelement 12 bzw. der Schneckenförderer 12 bezogen auf den länglichen Speicherraum 14 bzw. dessen Längsrichtung praktisch mittig endet. Dies erleichtert ebenfalls eine gleichmäßige Verteilung des Pulvers im Speicherraum 14.

## Patentansprüche

1. Anlage (1) zum Herstellen dreidimensionaler Objekte aus Werkstoffpulver, durch schichtweises Verfestigen dieses auf einer Prozessfläche (42) befindlichen Werkstoffpulvers an solchen Stellen der jeweiligen Schicht (40), welche nach Maßgabe von Geometriedaten dem gerade herzustellenden Objekt entsprechen, wobei die Anlage (1) einen die Prozessfläche umgebenen Prozessboden (46) und eine Pulverzuführvorrichtung (10) zur Zuführung, Bereitstellung und Verteilung des Pulvers auf der Prozessfläche (42) umfasst, wobei die Pulverzuführvorrichtung (10) umfasst:
• ein Transportelement (12) zum Zuführen von Pulver in die Pulverzuführvorrichtung (10);
• einen Speicherraum (14), in den das mindestens eine Transportelement (12) das Pulver zuführt;
• ein Prozesstransportelement (16), das auf Pulver im Speicherraum (14) wirken kann, um dieses in dosierter Menge benachbart zu der Prozessfläche (42) auf dem Prozessboden (46) bereitzustellen;
• einen Prozessschieber (18) zum Verteilen des benachbart zu der Prozessfläche (42) bereitgestellten Pulvers über die Prozessfläche (42), wobei das Prozesstransportelement (16) dafür ausgelegt ist, dass das Pulver benachbart zu der Prozessfläche (42) in Form einer Linie bereitstellbar ist, **dadurch gekennzeichnet, dass** das Prozesstransportelement (16) auf das Pulver mittels einer in einer Richtung hin- und herschiebbaren länglichen Schiebfläche (19) wirkt.

2. Anlage (1) mit Pulverzuführvorrichtung (10) nach Anspruch 1, **dadurch gekennzeichnet, dass** das Pulver mittels der Schiebfläche (19) so aus dem Speicherraum weggeschoben wird, dass das Pulver entsprechend der Form der länglichen Schiebfläche im Wesentlichen oder vollständig linienförmig benachbart zu der Prozessfläche angeordnet ist.

3. Anlage (1) mit Pulverzuführvorrichtung (10) nach dem Oberbegriff des Anspruchs 1 oder nach einem der vorhergehenden Ansprüche, **dadurch gekennzeichnet, dass** der Speicherraum (14) länglich ausgebildet ist und das Transportelement (12) an einem Speichertransportelement (20) endet, das teilweise im oder benachbart zu dem Speicherraum (14) angeordnet ist, um das zugeführte Pulver entlang des Speicherraums (14) zu verteilen und dass das Speichertransportelement (20) auf zwei Arten betätigbar ist, die einen Transport des Pulvers in entgegengesetzte Transportrichtungen bewirken, und/oder das Pulver gleichzeitig in zwei entgegengesetzte Richtungen transportiert.

4. Anlage (1) mit Pulverzuführvorrichtung (10) nach einem der vorhergehenden Ansprüche, **dadurch gekennzeichnet, dass** die Linie geradlinig oder konkav gekrümmt ist.

5. Anlage (1) mit Pulverzuführvorrichtung (10) nach einem der vorhergehenden Ansprüche, **dadurch gekennzeichnet, dass** der Prozessschieber (18) das bereitgestellte Pulver verteilt mittels Translationsbewegungen über die Prozessfläche hinweg, insbesondere nur mittels Translationsbewegungen in eine Richtung und Translationsbewegungen in die entgegengesetzte Richtung.

6. Anlage (1) mit Pulverzuführvorrichtung (10) nach einem der vorhergehenden Ansprüche, **dadurch gekennzeichnet, dass** der Prozessschieber (18) in Bezug auf den Prozessboden (46) verstellbar ist, so dass einmal ein unteres Ende des Prozessschiebers (18) den Prozessboden (46) berührt oder sehr nahe kommt und so dass einmal das untere Ende beabstandet von dem Prozessboden (46) ist.

7. Anlage (1) mit Pulverzuführvorrichtung (10) nach Anspruch 3 oder nach einem der Ansprüche 4 bis 6 in ihrem Rückbezug auf Anspruch 3, **dadurch gekennzeichnet, dass** das Speichertransportelement (20) einen Schneckenförderer umfasst oder ein Schneckenförderer ist, der entlang des Speicherraums (14) verläuft, insbesondere ein Schneckenförderer mit einem Antrieb, der zum Antreiben in beide Drehrichtungen ausgelegt ist, und/oder ein Scheckenförderer mit keinem gleichförmig durchgehenden Schneckengang sondern mit einem Bereich mit Drehsinn in die eine Richtung und einem Bereich mit Drehsinn in die andere Richtung.

8. Anlage (1) mit Pulverzuführvorrichtung (10) nach einem der vorhergehenden Ansprüche, **dadurch gekennzeichnet, dass** das Transportelement (12) einen Schneckenförderer umfasst oder ein Schneckenförderer ist.

9. Anlage (1) mit Pulverzuführvorrichtung (10) nach einem der vorhergehenden Ansprüche, **dadurch gekennzeichnet, dass** im Prozessboden (46) eine längliche schlitzartige Öffnung (21) bis zum Speicherraum (14) ausgebildet ist für die Bewegung des Pulvers benachbart zur Prozessfläche (42) hin mittels Einführen des Prozesstransportelements (16) in die Öffnung (21), wobei bevorzugt die Öffnung (21) und das Prozesstransportelement (16) so formschlüssig und/oder dichtend aufeinander abgestimmt sind, dass Pulver mit einer üblichen Korngröße im Wesentlichen nicht zwischen eine Seitenwand des Prozesstransportelements (16) und einen Innenwand der Öffnung (21) gelangen kann.

10. Anlage (1) mit Pulveraufbereitungsvorrichtung (1) nach einem der vorhergehenden Ansprüche, **dadurch gekennzeichnet, dass** der Speicherraum (14) unterhalb des Prozessbodens (46) und in Draufsicht seitlich der Prozessfläche (42) angeordnet ist.

11. Anlage (1) mit Pulveraufbereitungsvorrichtung (1) nach einem der vorhergehenden Ansprüche, **dadurch gekennzeichnet, dass** das Prozesstransportelement (16) als Hubkolbenelement, insbesondere als T-förmiges Hubkolbenelement ausgebildet ist.

## Claims

1. Facility (1) for the manufacture of three-dimensional objects from material powder, through layerwise consolidation of said material powder present on a process surface (42) in such places of the particular layer (40) that correspond, in accordance with geometrical data, to the object about to be manufactured, wherein the facility (1) comprises a process floor (46) surrounding the process surface and a powder feed device (10) to feed, provide and distribute the powder on the process surface (42), wherein the powder feed device (10) comprises:
• a conveying element (12) for feeding powder into the powder feed device (10);
• a reservoir (14), into which the at least one conveying element (12) feeds the powder;
• a process conveying element (16), which can act on powder in the reservoir (14), in order to provide this in dosed quantity on the process floor (46) adjacent to the process surface (42);
• a process pusher (18) for distributing the powder provided adjacent to the process surface (42) over the process surface (42), wherein the process conveying element (16) is designed, such that the powder adjacent to the process surface (42) can be provided in the form of a line, **characterised in that** the process conveying element (16) acts on the powder by means of an oblong pushing surface (19), which can be pushed to and fro in one direction.

2. Facility (1) with powder feed device (10) according to claim 1, **characterised in that** the powder is pushed away out of the reservoir by means of the pushing surface (19), such that the powder is disposed essentially or completely in the form of a line adjacent to the process surface according to the form of the oblong pushing surface.

3. Facility (1) with powder feed device (10) according to the preamble of claim 1 or according to any one of the preceding claims, **characterised in that** the reservoir (14) is configured oblong and the conveying element (12) ends at a reservoir conveying element (20), which is disposed partly in or adjacent to the reservoir (14), in order to distribute the fed-in powder along the reservoir (14) and that the reservoir conveying element (20) can be operated in two ways, which bring about conveyance of the powder in opposite conveying directions, and/or conveys the powder simultaneously in two opposite directions.

4. Facility (1) with powder feed device (10) according to any one of the preceding claims, **characterised in that** the line is straight or curved concavely.

5. Facility (1) with powder feed device (10) according to any one of the preceding claims, **characterised in that** the process pusher (18) distributes the provided powder by means of translational movements over the process surface, more particularly only by means of translational movements in one direction and translational movements in the opposite direction.

6. Facility (1) with powder feed device (10) according to any one of the preceding claims, **characterised in that** the process pusher (18) is adjustable in relation to the process floor (46), so that one time a lower end of the process pusher (18) touches the process floor (46) or comes very close to it and so that one time the lower end is spaced apart from the process floor (46).

7. Facility (1) with powder feed device (10) according to claim 3 or according to any one of claims 4 to 6 in their back-reference to claim 3, **characterised in that** the reservoir conveying element (20) comprises a screw conveyor or is a screw conveyor, which runs along the reservoir (14), more particularly a screw conveyor with a drive, which is designed to drive in both rotational directions, and/or a screw conveyor with no uniform screw flight throughout but with a region with rotation in one direction and a region with rotation in the other direction.

8. Facility (1) with powder feed device (10) according to any one of the preceding claims, **characterised in that** the conveying element (12) comprises a screw conveyor or is a screw conveyor.

9. Facility (1) with powder feed device (10) according to any one of the preceding claims, **characterised in that** an oblong slit-like opening (21) as far as the reservoir (14) is configured in the process floor (46) for movement of the powder adjacent to the process surface (42) by means of insertion of the process conveying element (16) into the opening (21), wherein preferably the opening (21) and the process conveying element (16) are matched together in a form-fitting and/or sealing manner, such that powder with a usual grain size essentially cannot get between a side wall of the process conveying element (16) and an inside wall of the opening (21).

10. Facility (1) with powder preparation device (1) according to any one of the preceding claims, **characterised in that** the reservoir (14) is disposed below the process floor (46) and in top view to the side of the process surface (42).

11. Facility (1) with powder preparation device (1) according to any one of the preceding claims, **characterised in that** the process conveying element (16) is configured as reciprocating-piston element, more particularly as T-shaped reciprocating-piston element.

## Revendications

1. Installation (1) pour la fabrication d'objets tridimensionnels à partir d'une poudre de matériau, par consolidation couche par couche de cette poudre de matériau située sur une surface de processus (42) aux endroits de la couche respective (40) qui, selon des données géométriques, correspondent à l'objet momentanément à produire, l'installation (1) comprenant un fond de processus (46) entourant la surface de processus et un dispositif d'alimentation en poudre (10) pour l'alimentation, la fourniture et la distribution de la poudre sur la surface de processus (42), le dispositif d'alimentation en poudre (10) comprenant
• un élément de transport (12) pour l'alimentation en poudre dans le dispositif d'alimentation en poudre (10) ;
• un espace de stockage (14) dans lequel ledit au moins un élément de transport (12) alimente la poudre ;
• un élément de transport de processus (16) qui peut agir sur la poudre dans l'espace de stockage (14) afin de la fournir en quantité dosée à proximité de la surface de processus (42) sur le fond de processus (46) ;
• un pousseur de processus (18) pour distribuer la poudre prévue à proximité de la surface de processus (42) sur la surface de processus (42), l'élément de transport de processus (16) étant adapté pour fournir la poudre à proximité de la surface de processus (42) sous la forme d'une ligne, **caractérisé en ce que** l'élément de transport de processus (16) agit sur la poudre au moyen d'une face pousseur allongée (19) qui peut être déplacée en va-et-vient dans une direction.

2. Installation (1) avec dispositif d'alimentation en poudre (10) selon la revendication 1, **caractérisé en ce que** la poudre est poussée hors de l'espace de stockage au moyen de la face pousseur (19) de telle sorte que la poudre est disposée de manière sensiblement ou complètement linéairement adjacente à la surface de traitement selon la forme de la face pousseur allongée.

3. Installation (1) avec dispositif d'alimentation en poudre (10) selon le terme générique de la revendication 1 ou selon l'une des revendications précédentes, **caractérisée en ce que** l'espace de stockage (14) est allongé et l'élément de transport (12) se termine par un élément de transport de stockage (20) qui est partiellement disposé dans ou adjacent à l'espace de stockage (14), afin de distribuer la poudre fournie le long de l'espace de stockage (14) et que l'élément de transport de stockage (20) est utilisable de deux manières qui font que la poudre est transportée dans des directions de transport opposées et/ou transportent simultanément la poudre dans deux directions opposées.

4. Installation (1) avec dispositif d'alimentation en poudre (10) selon l'une des revendications précédentes, **caractérisée en ce que** la ligne est incurvée en ligne droite ou de manière concave.

5. Installation (1) avec dispositif d'alimentation en poudre (10) selon l'une des revendications précédentes, **caractérisée en ce que** le pousseur de processus (18) répartit la poudre préparée au moyen de mouvements de translation au-delà de la surface de traitement, en particulier uniquement au moyen de mouvements de translation dans un sens et de mouvements de translation dans le sens opposé.

6. Installation (1) avec dispositif d'alimentation en poudre (10) selon l'une des revendications précédentes, **caractérisée en ce que** le pousseur de processus (18) est réglable par rapport au fond de processus (46) de sorte qu'une fois une extrémité inférieure du pousseur de processus (18) touche ou s'approche très près du fond de processus (46) et de sorte qu'une fois l'extrémité inférieure est espacée du fond de processus (46).

7. Installation (1) avec dispositif d'alimentation en poudre (10) selon la revendication 3 ou selon l'une des revendications 4 à 6, en référence à la revendication 3, **caractérisée en ce que** l'élément de transport de stockage (20) comprend un transporteur à vis sans fin ou est un transporteur à vis sans fin se déplaçant le long de l'espace de stockage (14), en particulier un transporteur à vis sans fin avec un entraînement pouvant être entraîné dans les deux sens de rotation et/ou un transporteur à vis sans fin sans filet uniformément continu mais avec une zone avec sens de rotation dans un sens et une zone avec sens de rotation dans l'autre sens.

8. Installation (1) avec dispositif d'alimentation en poudre (10) selon l'une des revendications précédentes, **caractérisée en ce que** l'élément de transport (12) comprend un transporteur à vis sans fin ou est un transporteur à vis sans fin.

9. Installation (1) avec dispositif d'alimentation en poudre (10) selon l'une des revendications précédentes, **caractérisée en ce qu'**une ouverture (21) allongée en forme de fente est formée dans le fond de processus (46) jusqu'à l'espace de stockage (14) pour le déplacement de la poudre à proximité de la surface de processus (42) au moyen de l'introduction de l'élément de transport de processus (16) dans l'ouverture (21), l'ouverture (21) et l'élément de transport de processus (16) étant de préférence adaptés l'un à l'autre par complémentarité de forme et/ou de manière étanche, de telle sorte qu'une poudre ayant une granulométrie habituelle ne peut pratiquement pas passer entre une paroi latérale de l'élément de transport de processus (16) et une paroi intérieure de l'ouverture (21).

10. Installation (1) avec dispositif de traitement de poudre (1) selon l'une des revendications précédentes, **caractérisée en ce que** l'espace de stockage (14) est disposé sous le fond de processus (46) et, en vue de dessus, à côté de la surface de processus (42).

11. Installation (1) avec dispositif de traitement de poudre (1) selon l'une des revendications précédentes, **caractérisée en ce que** l'élément de transport de processus (16) est conçu comme un élément de piston, en particulier comme un élément de piston en forme de T.
